# EUROPEAN PATENT APPLICATION

(11) **EP 3 392 009 A1**
(43) Date of publication of application: **24.10.2018**
(21) Application number: 16874702.0
(22) Date of filing: 23.11.2016
(51) Int. Cl.: B28B 1/50, B28C 5/38, B01F 3/04

(54) **PRODUCTION PROCESS FOR NITROGEN FOAM CONCRETE SELF-INSULATING BLOCK AND FOAMING DEVICE THEREFOR**

(30) Priority: 15.12.2015 CN 201510934736
(71) Applicant: Hebei Sanshan Building Materials Technology Co., Ltd., Shijiazhuang, Hebei 050800 (CN)
(72) Inventor: ZHANG, Genzhong, Shijiazhuang Hebei 050800 (CN)
(74) Representative: dompatent von Kreisler Selting Werner - Partnerschaft von Patent- und Rechtsanwälten mbB
(86) International application number: PCT/CN2016/106845
(87) International publication number: WO 2017/101645

(57) **Abstract**

Provided is a production process for a nitrogen foamed concrete self-insulating block, comprising the following steps: pre-preparing a foaming liquid filled with nitrogen, pre-preparing a concrete slurry, preparing a foamed concrete slurry, casting moulding, carrying out thermal insulating and demoulding. At the same time, further provided is a foaming device used for the production process for a nitrogen foamed concrete self-insulating block, comprising a foaming agent storage tank, a vacuum foaming tank, a compressed nitrogen pipe, a first transfer pump and a second transfer pump. The block has the advantages of a low heat conductivity coefficient and durability.

## Description

### THCHNICAL FIELD

The present application relates to the technical field of production of building materials, and more particularly, relates to a production process for nitrogen foam concrete self-insulation block and a foaming device thereof.

### BACKGROUND

With completely promoting and continuously deepening of building energy conservation practice in China, an urgent demand for various heat preservation systems is proposed, an integration of energy conservation and structure has become an important direction for development and application of a structural system. An outer wall self-insulation is an important part of building energy conservation practice, and thus self-insulation blocks serving as a main wall material for the integration of energy conservation and structure are developed quickly.

Foam concrete self-insulation blocks, which serve as one kind of commonly used self-insulation wall material, belong to an inorganic lightweight heat preservation material, have excellent thermal performance, physical mechanical performance and non-inflammability, have good construction performance and filling property, and can achieve an online filling on a block production line. The block production line and blocks are maintained simultaneously, and a block manufacturing device has reached an automatic and high efficient production level. However, at present, most foam concrete adopts a chemical foaming method, in which a material produces a chemical reaction and produces new gases to foam. A main characteristic of a chemical foaming is that: foams have no bubble walls, are weak in stability, and can stably exist only when taking a hydration product of a material such as cement as a substrate; moreover, bubble diameters of the foams change along with variations of pressures and the amount of foaming material, and thus are hard to be controlled.

### TECHNICAL PROBLEM

A technical problem as solvable by the present application is to provide a production process for nitrogen foamed concrete self-insulation block and a foaming device thereof which have a simple process and a low production cost, so as to reduce a heat conductivity coefficient, improve heat conservation and insulation performance of concrete self-insulation blocks, and lengthen service lives of foam concrete self-insulation blocks.

### TECHNICAL SOLUTION

In order to solve the aforesaid technical problems, a technical solution applied by the present application is that:
a production process for nitrogen foamed concrete self-insulation block comprising following steps:
1) pre-preparing a foaming liquid filled with nitrogen: mixing animal protein foaming agent with water to form the foaming liquid; filling nitrogen into the foaming liquid to form the foaming liquid filled with nitrogen;
2) pre-preparing concrete slurry: adding material and water into a stirring device, and stirring and mixing to form the concrete slurry;
3) pre-preparing foamed concrete slurry: adding the foaming liquid filled with nitrogen into the concrete slurry, and stirring the concrete slurry sufficiently to obtain the foamed concrete slurry;
4) casting moulding: injecting the foamed concrete slurry into a mould, and moulding by casting; and
5) thermal insulating and demoulding: insulating and maintaining the moulded foamed concrete for a period of time, and then demoulding.

Preferably, the foaming device comprises: a foaming agent storage tank, a vacuum foaming tank, a compressed nitrogen pipe, a plunger pump and a hose pump, animal protein and water are mixed in the foaming agent storage tank to form the foaming liquid, the foaming liquid is conveyed into the vacuum foaming tank through the plunger pump, the foaming liquid collides with spiral ribbons in the vacuum foaming tank to produce homogeneous foams, nitrogen exhausted from a nitrogen tank is compressed by an air compressor, thereby forms high pressure nitrogen which enters the vacuum foaming tank again to be filled into the foams of the foaming liquid.

Preferably, a ratio of the animal protein foaming to the water in the foaming liquid is 1:25.

Preferably, a ratio of a density of the foamed concrete slurry to a dry density of the foamed concrete slurry is 70:100.

Preferably, the foaming device comprises: a foaming agent storage tank, a vacuum foaming tank, a compressed nitrogen pipe, a first transfer pump and a second transfer pump; the foaming agent storage tank is filled with animal protein foaming agent aqueous solution, the foaming agent storage tank is communicated with the vacuum foaming tank through the first transfer pipe and a pipeline, the compressed nitrogen pipe is communicated with the vacuum foaming tank, the vacuum foaming tank transfers material into a stirring device through the second transfer pump and a feed delivery pipe, the vacuum foaming tank is provided therein with evenly distributed spiral ribbons.

Preferably, the spiral ribbon is a spiral metal wire.

Preferably, the first transfer pump is a plunger pump, and the second transfer pump is a hose pump.

### ADVANTAGEOUS EFFECTS

Advantageous effects obtained by applying the aforesaid technical solutions are reflected in that: the foaming device is used to fill nitrogen into the foaming liquid and thereby form the foaming liquid filled with nitrogen, the foaming liquid further enters the stirring device to be mixed with the concrete slurry sufficiently, thereby forming the foam concrete slurry which is then injected into the mould to be moulded by casting, a thermal preservation is performed for a period of time, and then demoulding is performed, so that the foam concrete block filled with nitrogen is obtained. The present application has the advantages of simple process and low production cost, the manufactured foam concrete blocks has the characteristics of low heat conductivity coefficient, high performance of heat preservation and heat insulation, and long service lives, and are appropriate to be popularized and put into practice.

### BRIEF DESCRIPTION OF THE DRAWINGS

FIG.1 illustrates a structural schematic view of a production line used in an embodiment of the present application;
FIG. 2 illustrates a schematic view of a foaming device shown in FIG. 1.

In the figures, 1-material storage device, 2-upper die device, 3-stirring device, 4-conveyer, 5-foaming device, 6-feed delivery pipe, 7-temperature control room, 8-demoulding device, 9-cross cutting device, 10-vertical cutting device, 11-foaming agent storage tank, 12-vacuum foaming tank, 13-compressed nitrogen pipe, 14-first transfer pump, 15-spiral ribbon, 16- second transfer pump, 17-air compressor, 18-nitrogen tank.

### DETAILED DESCRIPTION OF THE PREFERRED EMBODIMENTS

The present application will be further described in detail below with reference to accompanying figures and detailed embodiments.

A production process of nitrogen foamed concrete self-insulation block comprising the following steps:
(I) pre-preparing a foaming liquid filled with nitrogen: mixing animal protein foaming agent with water to form the foaming liquid; filling nitrogen into the foaming liquid to form the foaming liquid filled with nitrogen;
(II) pre-preparing concrete slurry: adding material and water into a stirring device, and stirring and mixing to form the concrete slurry;
(III) pre-preparing foamed concrete slurry: adding the foaming liquid filled with nitrogen into the concrete slurry, and stirring the concrete slurry sufficiently to obtain the foamed concrete slurry;
(IV) casting moulding: injecting the foamed concrete slurry into a mould, and moulding by casting; and
(V) thermal insulating and demoulding: insulating and maintaining the moulded foamed concrete for a period of time, and then demoulding.

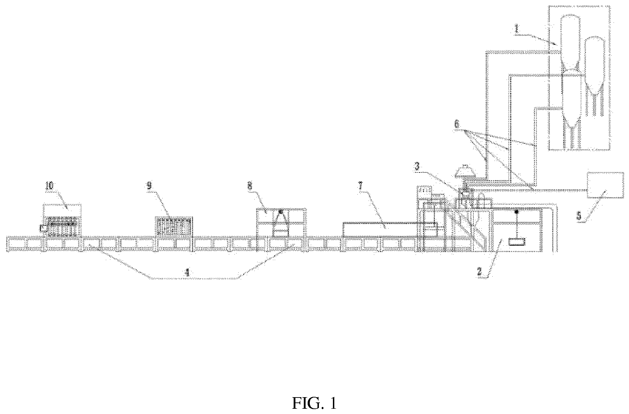

As shown in FIG. 1, a production line of the aforesaid production process comprises a control device, a material storage device 1, an upper die device 2, a temperature control room 7, a foaming device 5, a stirring device 3 and a conveyer 4. Materials and water in the material storage device 1 are metered as required, and then are transmitted into the stirring device 3 to be stirred; meanwhile, the foaming device 5 is used to produce foams filled with nitrogen, which are conveyed into the stirring device 3; various materials and foams are mixed sufficiently in the stirring device 3 to obtain foam concrete slurry, wherein a ratio of a dry density of the foam concrete slurry to a density of the foam concrete slurry is 100:70; after the foam concrete slurry is injected into a mould of the upper die device 2 and is moulded by casting, it is conveyed by the conveyer 4 to the temperature control room 7 to be insulated and maintained, when the foam concrete possesses certain hardness, it is further conveyed by the conveyer 4 to the demoulding device 8 to be demoulded mechanically. The foam concrete that has been demoulded by casting is conveyed by the conveyer 4 to a cross cutting device 9 and a vertical cutting device 10 orderly to be cut automatically, a control device controls starting and stopping of the conveyer 4, the cross cutting device 9 and the vertical cutting device 10, so as to perform positioning of the product and accomplish cross cuttings and vertical cuttings according to a designated size, thereby cutting the foam concrete into finished products which are finally conveyed to a packaging area by the conveyer 4.

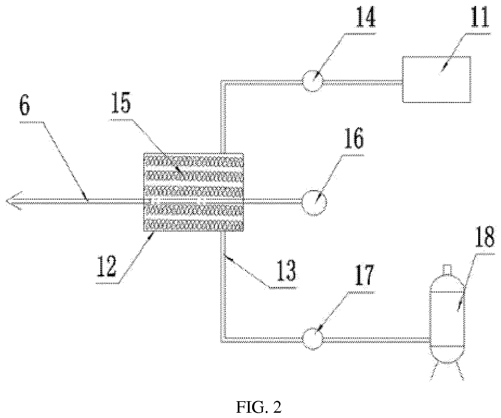

As shown in FIG. 2, a nitrogen foaming device 5 used by the aforesaid production process for nitrogen foamed concrete self-insulation block comprises a foaming agent storage tank 11, a vacuum foaming tank 12, a compressed nitrogen pipe 13, a plunger pump 14 and a hose pump 16, in the foaming agent storage tank 11, animal protein foaming agent and water are mixed to form a foaming liquid in which a ratio of the animal protein foaming agent to the water is 1:25. By the plunger pump 14, the foaming liquid is fed into the vacuum foaming tank 12, the foaming liquid collides with spiral metal wires 15 in the vacuum foaming tank 12 to produce homogeneous foams. Nitrogen exhausted from a nitrogen tank 18 is compressed by the air compressor 17 and then forms high pressure nitrogen which enters the vacuum foaming tank 12 again and is filled into the foams of the foaming liquid. A nitrogen production device is used to produce nitrogen with a gas content of 99%, which enters the nitrogen tank 18, so that the foams filled with nitrogen are produced by the foaming device 5 in a sealed condition, the foams filled with nitrogen enter the stirring device 3 again to be stirred and mixed with the various materials thoroughly, thereby obtaining the foam concrete slurry.

Wherein, in the temperature control room 7, a thermal insulation operation is performed by an electrical heater or a steam pipe for the foam concrete which is molded by casting in the upper die device 2, such that the foam concrete can be maintained and has desired hardness.

When a foam concrete self-insulation block obtained by cutting the foam concrete product produced by the aforesaid method is maintained naturally for 28 days, it can achieve the following product performances: a heat conductivity coefficient of 0.7-0.9 MPa, a compression strength above 3.5, and a volume weight of 500Kg/m³. This foam concrete self-insulation block reduces the heat conductivity coefficient by 30% to 50% with respect to the traditional foam concrete product produced by filling normal air, and improves heat preservation and heat insulation of the product greatly. Meanwhile, since the product contains nitrogen with a purity of 99.99% therein, and nitrogen has a weak fluidity, a high density, a good stability, is not prone to overflow, an effect of durable heat preservation and heat insulation can be achieved. The foams in a foam concrete produced by an old product process contains oxygen and carbon dioxide which may oxidize materials of the product and thereby reduces a service life of the product greatly, however, in the foam concrete produced by the method in the present application, oxygen and carbon dioxide are replaced by nitrogen, such that an oxidation reaction is avoided, and thus the service life of the product is lengthened. In addition, nitrogen is the gas with the most content in the air, the purity of nitrogen in the air is 78%; however, after oxygen is extracted from the air by some enterprises, the rest gases are mainly oxygen, because the purity of oxygen in the air is merely 21%. Therefore, we can use some nitrogen to produce very qualified construction material products, and thereby reduce comprehensive cost of the products.

### Industrial applicability

As stated above, the present application has advantages of simple production process and low production cost. The foam concrete self-insulation block, which is filled with nitrogen, has a much better cost performance than traditional concrete products, such that the performance of heat preservation and heat insulation of the foam concrete self-insulation block can be improved, a heat conductivity coefficient can be reduced, and the service life of the foam concrete self-insulation block can be lengthened.

## Claims

1. A production process of nitrogen foamed concrete self-insulation block comprising the following steps:
pre-preparing a foaming liquid filled with nitrogen: mixing animal protein foaming agent with water to form the foaming liquid; filling nitrogen into the foaming liquid to form the foaming liquid filled with nitrogen;
pre-preparing a concrete slurry: adding material and water into a stirring device, and stirring and mixing them to form the concrete slurry;
preparing a foamed concrete slurry: adding the foaming liquid filled with nitrogen into the concrete slurry and stirring sufficiently to obtain the foamed concrete slurry;
casting moulding: injecting the foamed concrete slurry into a mould, and moulding by casting; and
thermal insulating and demoulding: insulating and maintaining the moulded foamed concrete for a period of time, and then demoulding.

2. The production process according to claim 1, wherein a ratio of the animal protein foaming agent to the water in the foaming liquid is 1:25.

3. The production process according to claim 1, wherein a ratio of the density of the foamed concrete slurry to the dry density of the foamed concrete slurry is 70:100.

4. A nitrogen foaming device applicable to the production process according to claim 1, comprising: a foaming agent storage tank (11), a vacuum foaming tank (12), a compressed nitrogen pipe (13), a first transfer pump (14) and a second transfer pump (16); the foaming agent storage tank (11) is filled with an aqueous solution of an animal protein foaming agent, the foaming agent storage tank (11) is communicated with the vacuum foaming tank (12) through the first transfer pipe (14) and a pipeline, the compressed nitrogen pipe (13) is communicated with the vacuum foaming tank (12), the vacuum foaming tank (12) is configured to transfer material into a stirring device (2) through the second transfer pump (16) and a feed delivery pipe (6), wherein the vacuum foaming tank (12) is provided therein with evenly distributed spiral ribbons (15).

5. The foaming device according to claim 4, wherein the spiral ribbons (15) are spiral metal wires.

6. The foaming device according to claim 4, wherein the first transfer pump (14) is a plunger pump, and the second transfer pump (17) is a hose pump.
